Europäisches Patentamt

European Patent Office

Office européen des brevets

(19)

(11) Publication number: 0 461 728 A1

## (12) EUROPEAN PATENT APPLICATION

(21) Application number: 91201499.0

(22) Date of filing: 13.06.91

(51) Int. Cl.⁵: A22C 21/06

(30) Priority: 14.06.90

(43) Date of publication of application:
18.12.91 Bulletin 91/51

(84) Designated Contracting States:
AT BE CH DE DK ES FR GB GR IT LI LU NL SE

(71) Applicant: MACHINEFABRIEK MEYN B.V.
Noordeinde 68
NL-1511 AE Oostzaan(NL)

(72) Inventor: Meyn, Cornelis
c/o Noordeinde 68
NL-1511 AE Oostzaan(NL)

(74) Representative: Voncken, Bartholomeus Maria
Christiaan et al
Octrooibureau Los en Stigter B.V. P.O. Box
20052
NL-1000 HB Amsterdam(NL)

(54) Apparatus for removing the guts from slaughtered poultry.

(57) Apparatus for removing the guts from slaughtered poultry, from which the anus already has been removed, comprising a suction pipe (10) which can be applied in the abdominal cavity and a nozzle (13) for supplying a pressurized medium, preferably air, which can be applied in the abdominal cavity too. Preferably the suction pipe (10) and the nozzle (13) are movable relative to each other, whereas the nozzle can engage the end (17) of the suction pipe in a cutting sense for cutting loose the guts from the stomach.

fig.1

The invention relates to an apparatus for removing the guts from slaughtered poultry from which the anus already has been removed.

One step during processing slaughtered poultry comprises removing the guts from the abdominal cavity. This occurs after the removal of the anus by an appropriate apparatus.

Apart from a manual removal of the guts, during which the abdomen of the poultry is partially cut open and the guts are loosened from the stomach and subsequently removed, it is also known to use an apparatus for removing the guts. At such known apparatus scraping or gripping means are applied to loosen the guts from the stomach and removing them from the abdominal cavity.

The invention aims at providing a new apparatus of the above mentioned type, which offers an improved and extremely reliable operation.

For this purpose the apparatus according to the invention is characterized by a suction pipe which can be applied in the abdominal cavity and a nozzle for supplying a pressurized medium, preferably air, which can be applied in the abdominal cavity too.

The pressurized medium leaving the nozzle causes a displacement of the guts in such a way that these can effectively be sucked up by the suction pipe.

In a preferred embodiment of the apparatus according to the invention the nozzle relative to the suction pipe is movable between a first position, in which it is situated at a distance from the end of the suction pipe and a second position in which it engages this end.

In the first position of the nozzle the end of the suction pipe is opened, so as to suck the guts hereinto. Also, in this position an optimal co-operation between the medium leaving the nozzle and the suction pipe takes place. When the nozzle is in the second position, the end of the suction pipe is closed. In this position the suction pipe and the nozzle can be applied into the abdominal cavity of the poultry, without the possibility of a blockage of the end of the suction pipe.

Also, it is preferred, that the nozzle and the end of the suction pipe in the second position co-operate in a cutting sense. When in the first position of the nozzle the guts are sucked into the suction pipe they can be cut loose from the stomach by moving the nozzle into the second positon. Such a cutting co-operation between the nozzle and the end of the suction pipe can be achieved for example when the nozzle has a wedge shaped part, which can be received in the end of the suction pipe.

In order to achieve the movement of the suction pipe and the nozzle as well as their relative movement, it is preferred, according to another embodiment of the apparatus according to the invention, that the nozzle and the suction pipe are slidable along a guiding. For driving them several drive mechanisms are appropriate such as cylinder piston assemblies or follow rollers co-operating with curved tracks.

When the nozzle and the suction pipe are attached to slides which can slide along the guiding, whereas the nozzle and the suction pipe relative to the respective slides are movable in a limited way against a spring force, an automatic adjustment of the position of the suction pipe and the nozzle is possible, for example to birds with different dimensions.

The operation of the apparatus is based on the principle that the guts under influence of the medium leaving the nozzle and the sucking action of the suction pipe are sucked into the suction pipe. In order to prevent that the stomach is partially sucked into the suction pipe and blocks this pipe, it is possible according to a convenient embodiment of the apparatus according to the invention, that the end of the suction pipe is surrounded by means reducing the entrance to the end. For example such entry reducing means may consist of two pipes carrying the nozzle and placed diametrically relative to the suction pipe. Consequently these pipes can effectuate a double function: the supply of the pressurized medium to the nozzle and impeding the sucking in of the stomach into the suction pipe.

For controlling the apparatus an embodiment is conceivable in which the nozzle and or the suction pipe can be activated selectively by control means. Such control means may react on the absolute or relative positions of the nozzle or suction pipe, respectively, or may be connected to a control programm.

The invention further relates to a rotating device for processing poultry suspended with its legs from a suspension conveyor, comprising a number of apparatus according to the invention regularly spaced along its circumference.

Hereinafter the invention will be elucidated referring to the drawing, in which an embodiment of the apparatus according to the invention is illustrated.

Fig. 1 shows schematically and in perspective an embodiment of the apparatus according to the invention, and

Fig. 2, 3 and 4 show schematically three different positions of the apparatus relative to a bird to be processed.

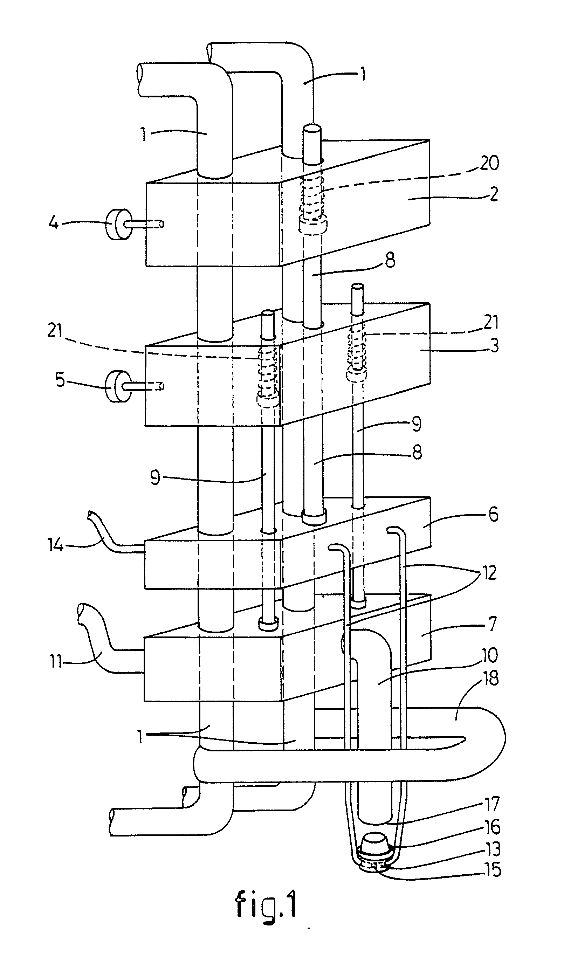

The apparatus represented schematically in fig. 1 comprises two slides which are movable up and down along parallel vertical guiding rods 1, that is an upper slide 2 and a lower slide 3. In the shown embodiment the upward and downward motion of these slides 2, 3 is caused by follow rollers 4 and 5 which co-operate with curved tracks not shown.

Two auxiliary slides are positioned below slides 2, 3, that is an upper auxiliary slide 6 and a lower auxiliary slide 7, which are movable up and down along the guiding rods 1 too. Through a control rod 8 the upper auxiliary slide 6 is connected with the uppper slide 2. Essentially this means, that the motion of the upper slide 2 is carried to the upper auxiliary slide 6 by means of the control rod 8.

Correspondingly the lower auxiliary slide 7 is connected to the lower slide 3 through to control rods 9, such that a motion of the lower slide 3 will lead to a corresponding motion of the lower auxiliary slide 7. It is noted, that control rod 8 extends through lower slide 3 but does not engage it, whereas control rods 9 extend through upper auxiliary slide 6 but do not engage it either.

Onto the lower auxiliary slide 7 a downwardly extending suction pipe 10 is provided which, in a way not shown further, is connected with a line 11 leading through the internal lower auxiliary slide 7 to a vacuum source.

Onto the upper auxiliary slide 6 two pipes 12 are attached which in parallel to and diametrically relative to the suction pipe 10 extend downwardly too. At the lowermost end these two pipes 12 carry a nozzle 13. In a way not shown further at least one of these pipes 12 is connected with a line 14 which, through the internal upper auxiliary slide 6, leads to a source for a pressurized medium, such as a source of pressurized air. At its end facing away from the suction pipe 10 the nozzle 13 comprises an opening 15, represented in dotted lines for emitting the pressurized medium, such as pressurized air.

At its side facing the suction pipe 10 the nozzle 13 comprises a wedge shaped part 16 which in a way to be described hereinafter may co-operate with the end 17 of the suction pipe 10.

Further fig. 1 shows that a supporting brace 18 is attached to the guiding rods 1, being used for correctly positioning the bird to be processed. The bird to be processed could for example be supplied in a way known per se suspended with its legs from a suspension conveyor and could be positioned with its tail against the brace.

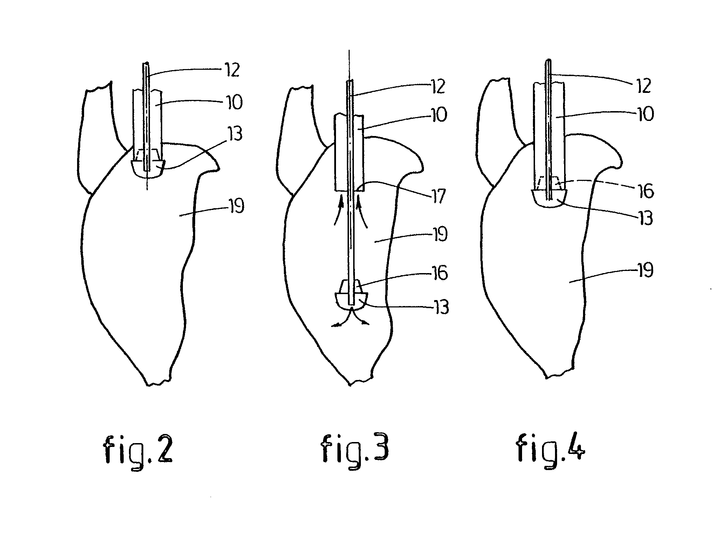

Now referring to fig. 2-4, the operation of the apparatus will be explained.

Initially the slides 2 and 3 are in their uppermost position in which the end of the suction pipe 10 and the nozzle 13 do not project below the supporting brace 18. In a way not shown further a bird to be processed is positioned with its tail against the supporting brace 18, such that an opening created at the anus of the bird during a previously accomplished operation will be aligned with the suction pipe 10 and the nozzle 13.

Due to the co-operation between the follow rollers 4 and 5 and appropriately shaped curved tracks, not shown, the slides 2 and 3 (and thus also auxiliary slides 6 and 7) are now lowered along guiding rods 1. It is noted, that this lowering of the slides 2 and 3 preferably occurs in the position, in which the wedge shaped part 16 of the nozzle 13 is received in the end 17 of the suction pipe 10. Due to this blockages of the suction pipe previous to its real sucking action are prevented. Such a position is schematically indicated in fig. 2. While lowering the slides 2 and 3 the nozzle 13 and the end of the suction pipe 10 are entered into the abdominal cavity of the bird to be processed 19 through the opening mentioned before (fig. 2).

When the suction pipe 10 has been moved in the abdominal cavity of the bird 19 at the desired depth the motion of the lower slide 3, and thus the lower auxiliary slide 7, is stopped. The upper slide 2 (and thus the upper auxiliary slide 6) however keeps moving downwards until the nozzle 13 is at a desired distance below the end 17 of the suction pipe 10 (fig. 3). In this position pressurized air or alike is supplied to the nozzle 13 through pipes 12, which pressurized air leaves the nozzle through opening 15 and enters the abdominal cavity of the bird. Further the suction pipe 10 is activated. Due to the combined effect of the pressurized air leaving the nozzle 13 and the sucking action of the suction pipe 10 the guts are effectively moved from the abdominal cavity of the bird 19 towards the suction pipe 10 and sucked hereinto. The stomach attached to the guts however can not enter the suction pipe 10 for the pipes 12 positioned diametrically close to the suction pipe 10 will impede this.

When the guts have been sucked into the suction pipe 10 completely the upper slide 2, together with the upper auxiliary slide 6, is lifted again along the guiding rods 1, until the wedge shaped part 16 of the nozzle 13 enters the end 17 of the suction pipe 10. The shape of the wedge shaped part 16 and the end 17 of the suction pipe 10 is chosen such, that a cutting action occurs disconnecting the guts from the attached stomach. This position is shown in fig. 4. It is noted, that it is principally possible too to further lower the suction pipe 10 until the wedge shaped part 16 is received in the end 17.

After cutting loose the stomach from the guts like this the guts may be removed through line 11. Next the slides 2 and 3 (together with auxiliary slides 6 and 7) can be lifted towards their starting position, while removing the nozzle 13 together with suction pipe 10 from the bird. Thereafter the bird can be removed from the apparatus and a new bird to be processed may be presented.

The activation of the suction pipe 10 and the supply of pressurized air or alike through pipes 12 may occur in many different ways. It is possible for example that the upper auxiliary slide 6 carries a control switch for a valve regulating the access to the pipes 12, said control switch being activated when the distance between the upper auxiliary slide 6 and the lower auxiliary slide (thus between the nozzle 13 and the end 17 of the suction pipe 10) has reached a predetermined value. Otherwise it is possible too to provide a control programm.

As appears from fig. 1 the control rod 8, which interconnects the upper slide 2 and the upper auxiliary slide 6, is not stationary fixed to the upper slide 2, but the connection therebetween is realised by means of a compression spring 20. This compression spring 20 allows an upward shift of the control rod 8 relative to the upper slide 2 if the nozzle 13 experiences to much resistance while entering the bird 19. Like this damaging the bird on one hand and the apparatus on the other hand is prevented.

For the same reason the control rods 9 do not engage directly upper slide 3 but through compression springs 21.

It is possible, that the illustrated apparatus is part of a rotating device for processing birds suspended with their legs from a suspension conveyor. In such a case said device comprises a number of apparatus according to the type described before which successively process birds supplied by the suspension conveyor.

The invention is not limited to the embodiment described before, which can be varied widely within the scope of the invention.

## Claims

1. Apparatus for removing the guts from slaughtered poultry (19) from which the anus already has been removed, **characterized** by a suction pipe (10) which can be applied in the abdominal cavity and a nozzle (13) for supplying a pressurized medium, preferably air, which can be applied in the abdominal cavity too.

2. Apparatus according to claim 1, **characterized** in that the nozzle (13) relative to the suction pipe (10) is movable between a first position, in which it is situated at a distance from the end (17) of the suction pipe and a second position in which it engages this end.

3. Apparatus according to claim 2, **characterized** in that the nozzle (13) and the end (17) of the suction pipe (10) in the second position co-operate in a cutting sense.

4. Apparatus according to claim 3, **character-**

**ized** in that the nozzle (13) has a wedge shaped part (16) which can be received in the end (17) of the suction pipe (10).

5. Apparatus according to one of the claims 1-4, **characterized** in that the nozzle (13) and the suction pipe (10) are slidable along a guiding (1).

6. Apparatus according to claim 5, **characterized** in that the nozzle (13) and the suction pipe (10) are attached to slides (2, 3) which can slide along the guiding (1), whereas the nozzle (13) and the suction pipe (10) relative to the respective slides are movable in a limited way against a spring force (20, 21).

7. Apparatus according to one of the claims 1-6, **characterized** in that the end (17) of the suction pipe (10) is surrounded by means (12) reducing the entrance to the end.

8. Apparatus according to claim 7, **characterized** in that the entry reducing means comprise two pipes (12) carrying the nozzle (13) and placed diametrically relative to the suction pipe (10).

9. Apparatus according to one of the claims 1-8, **characterized** in that the nozzle (13) and/or the suction pipe (10) can be activated selectively by control means.

10. Rotating device for processing poultry suspended with its legs from a suspension conveyor, comprising a number of apparatus according to one of the previous claims regularly spaced along its circumference.

fig.1

fig.2  fig.3  fig.4

European
Patent Office

**EUROPEAN SEARCH
REPORT**

Application Number

**EP 91 20 1499**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 099 039 (INE)<br>* column 3, line 10 - column 4, line 11 ** | 1,9 | A 22 C 21/06 |
| X | US-A-2 448 693 (TRELEASE)<br>* column 3, line 59 - line 72 * * * column 5, line 26 - line 47 ** | 1 | |
| A | US-A-2 448 693 (* column 5, line 72 - column 6, line 11 *) | 3 | |
| A | US-A-4 918 787 (HAZENBROEK)<br>* claim 11; figure 1 ** | 1,5,6,9 | |
| A | US-A-4 024 603 (HARBEN)<br>* abstract ** | 10 | |
| A | NL-A-7 907 569 (SYSTEMATE HOLLAND) | | |
| A | EP-A-0 258 499 (LINCO HOLLAND ENGINEERING) | | |
| A | GB-A-8 740 98 (EVANS) | | |
| A | US-A-4 677 709 (DIXON) | | TECHNICAL FIELDS SEARCHED (Int. Cl.5) |
| A | US-A-3 137 031 (INE) | | A 22 C |
| A | US-A-3 802 028 (SCHEIER) | | |
| A | US-A-3 769 656 (JAHNKE) | | |

The present search report has been drawn up for all claims

| Place of search | Date of completion of search | Examiner |
|---|---|---|
| The Hague | 02 September 91 | DE LAMEILLIEURE D. |